# EUROPEAN PATENT SPECIFICATION

(11) **EP 2 963 276 B1**
(45) Date of publication and mention of the grant of the patent: **09.03.2022**
(21) Application number: 15167799.4
(22) Date of filing: 15.05.2015
(51) Int. Cl.: F02K 3/06

(54) **COMPACT NACELLE WITH CONTOURED FAN NOZZLE**
KOMPAKTE TRIEBWERKSVERKLEIDUNG MIT KONTURIERTER FANDÜSE
NACELLE COMPACTE AVEC UNE TUYÈRE DE SOUFFLANTE PROFILÉE

(30) Priority: 15.05.2014 US 201461993727 P
(43) Date of publication of application: 06.01.2016
(60) Divisional application: 16203045.6
(73) Proprietor: Raytheon Technologies Corporation, Farmington, CT 06032 (US)
(72) Inventor: WEINER, Richard Alan, Farmington, CT Connecticut 06032 (US); LORD, Wesley K., South Glastonbury, CT Connecticut 06073 (US)
(74) Representative: Dehns

(56) References cited:
- US-A- 3 648 800
- US-A- 5 524 847
- US-A- 5 653 406
- US-A1- 2005 211 824
- US-A1- 2014 083 079
- US-B2- 6 415 598
- US-B2- 6 969 028
- US-B2- 8 511 090

## Description

### FIELD OF THE DISCLOSURE

The subject matter of the present disclosure relates generally to gas turbine engines and, more particularly, to nacelles for gas turbine engines.

### BACKGROUND OF THE DISCLOSURE

Many modern aircraft employ gas turbine engines for propulsion. Such engines include a fan, compressor, combustor and turbine provided in serial fashion. Air enters the engine through the fan and is pressurized in the compressor. This pressurized air is mixed with fuel in the combustor. The fuel-air mixture is then ignited, generating hot combustion gases that flow downstream to the turbine. The turbine is driven by the exhaust gases and mechanically powers the compressor and fan via an internal shaft. Energy from the combustion gases not used by the turbine is discharged through an exhaust nozzle, producing thrust to power the aircraft. In addition to thrust generated by combustion gasses, the fan of turbofan jet turbine engines also produces thrust by accelerating and discharging ambient air through a fan exhaust nozzle.

Turbofan engines contain an engine core and fan surrounded by a fan cowl, forming part of the nacelle. The nacelle is a housing that contains the engine and may be suspended below a wing by a pylon. The fan is positioned forward of the engine core and within the fan cowl. The engine core is surrounded by an engine core cowl and the area between the fan cowl and the engine core cowl is functionally defined as the fan duct. This fan duct is substantially annular in shape to accommodate the airflow from the fan and around the engine core cowl. The airflow through the fan duct, known as bypass air, travels the length of the fan duct and exits at the aft end of the fan duct at a fan nozzle. The fan nozzle is comprised of an engine core cowl disposed within a fan cowl and is located at the aft portion of the fan duct.

The ratio of bypass air to engine core air is referred to as the bypass ratio. Modern engine design has called for higher and higher bypass ratios such that gas turbine engines can be designed to maximize efficiency by producing greater amounts of thrust per unit of fuel consumed. However, larger bypass ratios result in larger diameter engines. As they are often mounted under the wings, their diameter is limited by the available space between the wing and the ground. More space can be made available, but this adds weight and costs in the form of longer and heavier landing gear. Additionally, engine placement relative to the wing can affect both efficiency and safety. Various mounting and nacelle configurations can be used in attempts to increase safety while minimizing aerodynamic drag and aircraft weight.

One approach, shifting the engine aft towards the wing, may enable a reduction in drag associated with fan exhaust impingement on the wing, which may not be acceptable under aerospace regulations. Such an arrangement may cause the turbine to align with the main support structure of the wing.

Another approach, lowering the engine relative to the wing, may also enable a reduction in drag associated with fan exhaust impingement on the wing. However, this arrangement may necessitate longer and heavier landing gear, and may not be permissible due to ground clearance requirements.

A third approach involves increasing the fan duct length. While this configuration reduces drag resulting from fan exhaust impingement on the wing, it adds weight and increases internal fan duct losses.

These arrangements may each allow reduced jet exhaust drag on the wing, but also carry their own disadvantages of duct losses, added aircraft weight or decreased safety.

Accordingly, there is a need for an improved turbofan nacelle.

US 5524847 discloses a gas turbine engine according the preamble of claim 1.

Further gas turbine engines of the prior art are disclosed in US 6415598, US 2014/083079, US 8511090 and US 2005/211824.

### SUMMARY OF THE DISCLOSURE

In accordance with the invention, the present disclosure provides a gas turbine engine as set forth in claim 1.

The nacelle trailing rim may be aligned with a circumferential hump in the engine core cowl, the circumferential hump may be located at the nearest point along the engine core cowl to the nacelle trailing rim.

The nacelle may have a fourth length measured between the lower quadrant of the leading rim and the lower quadrant of the trailing rim.

The first length may be greater than the fourth length or the second and third lengths, or than the fourth length and the second and third lengths. Additionally, the second and third lengths may both be greater than the fourth length.

The upper portion of the nacelle trailing rim may extend farther aft than the lower portion or the lateral portions, or than the lower portion and the lateral portions. Further, the lateral portions may extend farther aft than the lower portion.

In an embodiment not forming part of the invention the nacelle trailing rim may further form a straight line between the midpoint of the nacelle trailing rim upper quadrant to the midpoint of the nacelle trailing rim lower quadrant when viewed laterally.

In accordance with the invention, this disclosure also provides a method of reducing gas turbine exhaust impingement on an aircraft wing as set forth in claim 9.

Other features and advantages of the disclosed systems and methods will be appreciated from reading the following detailed description in conjunction with the included drawing figures.

### BRIEF DESCRIPTION OF THE DRAWINGS

For further understanding of the disclosed concepts and embodiments, reference may be made to the following detailed description, read in connection with the drawings, wherein like elements are numbered alike, and in which:
FIG. 1 is a sectional view of a gas turbine engine with a high bypass ratio.
FIG. 2 is a front view of an aircraft depicted in schematic fashion to illustrate the relative diameters of larger and smaller bypass ratios as mounted on wings of an aircraft.
FIG. 3 is a rear perspective view of a gas turbine engine depicting that the four quadrants of the nacelle trailing rim have different angles and contours.
FIG. 4 is a front view of the engine of a gas turbine engine depicting the four quadrants of the nacelle leading rim.
FIG. 5 is a rear perspective view of a gas turbine engine depicting different axial lengths along upper and lateral portions of the nacelle.
FIG. 6 is a rear perspective view of a gas turbine engine depicting different axial lengths along lateral and lower portions of the nacelle.
FIG. 7 is a schematic side view of a gas turbine engine with portions of a nacelle sectioned and broken away to show details of the present disclosure.
FIG. 8 is a schematic side view similar to FIG. 7, but depicts an alternate embodiment of a gas turbine engine falling outside the scope of the claims with an alternate nacelle sectioned and broken away to show details of said nacelle
FIG. 9 is a flowchart depicting a sample sequence of steps which may be practiced using the teachings of the present disclosure.

### DETAILED DESCRIPTION OF THE DRAWINGS

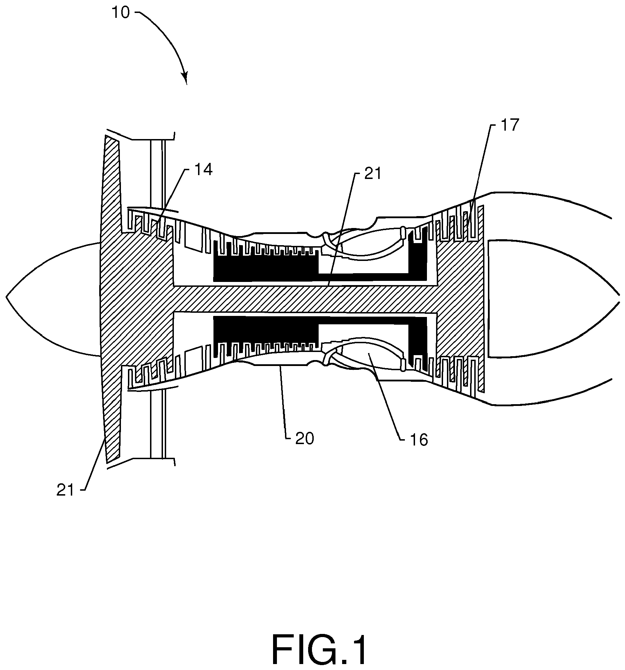

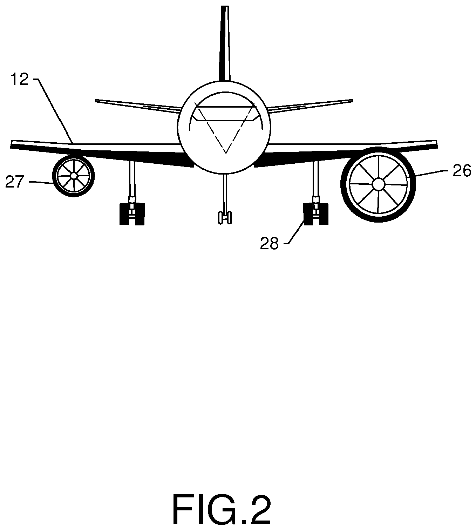

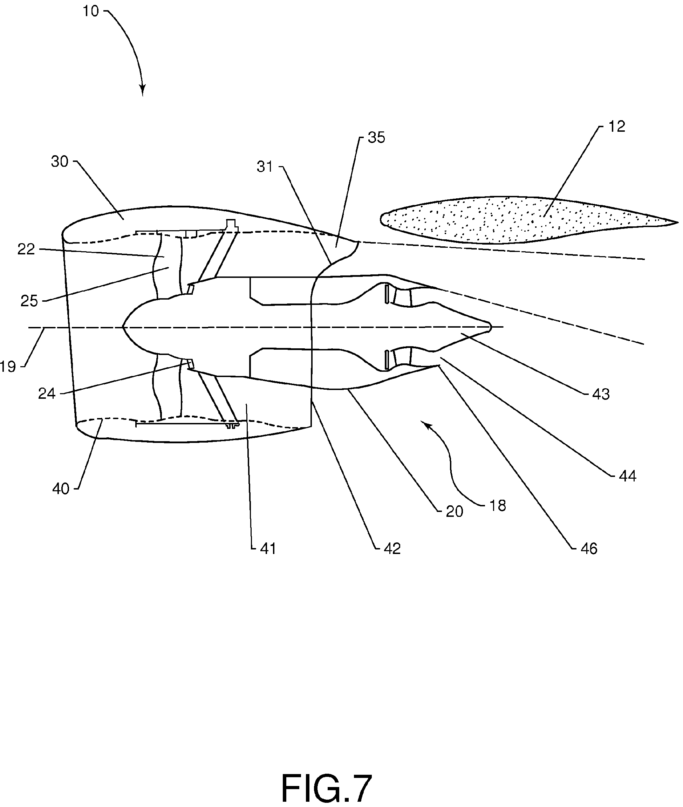

Turning now to the drawings, and with specific reference to FIG. 1, a gas turbine engine constructed in accordance with the present disclosure is generally referenced to by reference numeral 10. As best appreciated when viewed in concert with FIGS. 2 and 7, the engine 10 is typically mounted below an aircraft wing 12. The engine 10 includes a compressor 14, combustor 16 and turbine 17, known as the engine core 18, lying along a central longitudinal axis 19, and surrounded by an engine core cowl 20. The compressor 14 is connected to the turbine 17 via a central rotating shaft 21. Additionally, in a typical multi-spool design, plural turbine 17 sections are connected to, and drive, corresponding ones of plural sections of the compressor 14 and a fan 22, enabling increased compression efficiency.

As is well known in the art, ambient air enters the compressor 14 at an inlet 24, is pressurized, and then directed to the combustor 16, mixed with fuel and combusted, generating combustion gases that flow downstream to the turbine 17, which extracts kinetic energy from the exhausted combustion gases. The turbine 17, via shaft 21, rotatingly drives the compressor 14 and the fan 22, which draws in ambient air.

Generally, in "high bypass" gas turbine engines, the diameter of the inlet to the fan 22 is greater than the diameter of the inlet to core forward components, that is, the compressor 14, as reflected in their ratio, representing a "high bypass ratio," being greater than one and, for example, greater than eight or more. As shown in FIG. 2, the high bypass ratio engine 26 has a relatively larger diameter than in engine 27, which does not have a high bypass ratio. As turbofan jet engines are often mounted under an aircraft wing 12, a high bypass engine requires more ground clearance, necessitating longer and heavier landing gear 28.

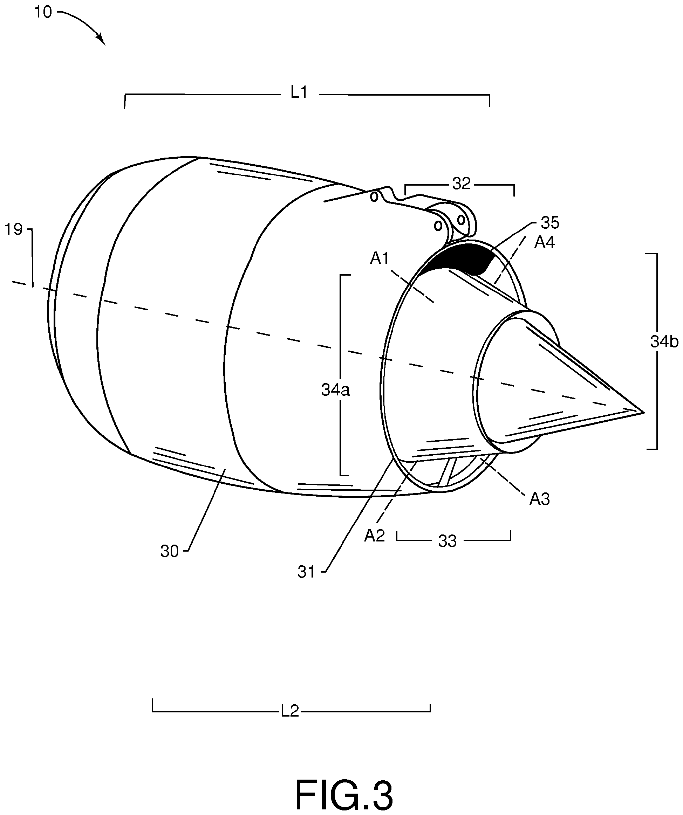

Turning to FIG. 3, a rear perspective view of a gas turbine engine having a nacelle 30 is shown. The nacelle 30 is a substantially cylindrical housing around the gas turbine engine 10 as shown best in FIG. 7. The nacelle 30 houses the engine 10 and is mounted below the aircraft wing 12. The interior surface of nacelle 30 consists of a fan cowl 40, which surrounds the fan 22 and core cowl 20. A fan duct 41 is functionally defined by the axially extending area between the engine core cowl 20 and the fan cowl 40. The fan duct 41 is substantially annular in shape to accommodate the airflow produced by the fan 22. This airflow travels the length of the fan duct 41 and exits downstream at a fan nozzle 42. A tail cone 43 may be employed at the engine core exhaust nozzle 44 to smooth the discharge of combustion gases from the engine core 18. Thrust is produced both by the ambient air accelerated aft by the fan 22 through the fan duct 41 and by exhaust gasses exiting from the engine core 18. A spinner 45 is located at the forward end of the engine core 18.

The fan nozzle 42 is located at the downstream exit of the fan duct 41. The fan nozzle 42 shape is defined by the axially extending area between the engine core cowl trailing rim 46 and the nacelle trailing rim 31. The fan 22, engine core 18 and nacelle 30 may be centered on a central longitudinal axis 19 running through the center of the engine core 18.

The nacelle 30 has a trailing rim 31 divided into an upper quadrant 32, a lower quadrant 33, a first lateral quadrant 34a and a second lateral quadrant 34b. An aft extension 35 of the nacelle trailing rim 31 is also illustrated.

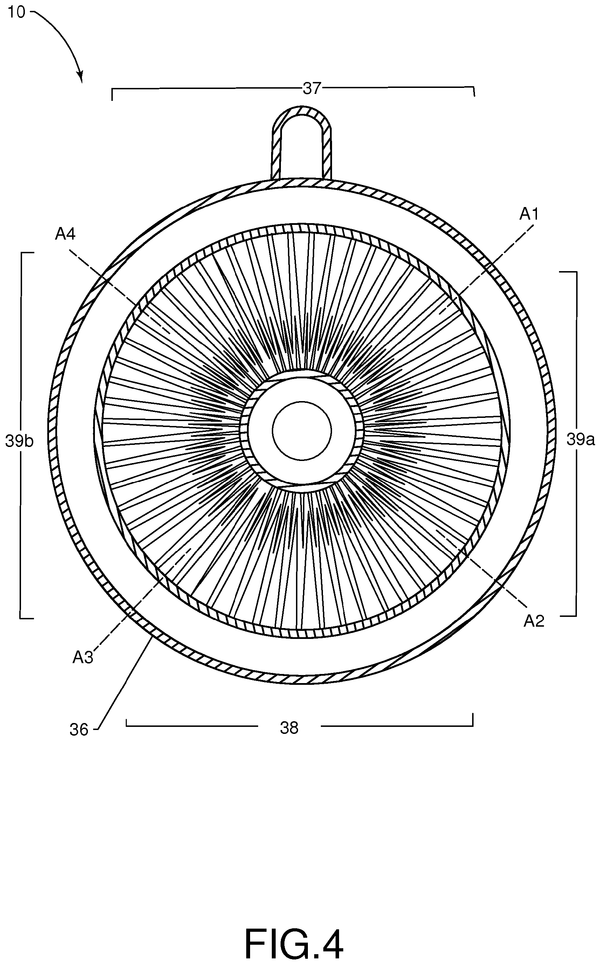

In FIG. 4, illustrating a front view of the engine 10, a nacelle leading rim 36 is divided into an upper quadrant 37, a lower quadrant 38, a first lateral quadrant 39a and a second lateral quadrant 39b. Axes A1, A2, A3 and A4 project radially from the central longitudinal axis 19 and divide the nacelle 30 into four quadrants. As best shown in FIGS. 3 and 4, Axis A1 is positioned at a 45 degree angle from the vertical when looking aft along the central longitudinal axis 19. Axes A2, A3 and A4 are positioned at 135, 225 and 315 degree angles, respectively, from the vertical when looking aft along the central longitudinal axis 19.

Axis A1 divides the nacelle leading rim upper 37 and one lateral quadrant 39a and the nacelle trailing rim upper 32 and one lateral quadrant 34a. Axis A2 divides the nacelle leading rim lower 38 and one lateral quadrant 39a and the nacelle trailing rim lower 33 and one lateral quadrant 34a. Axis A3 divides the nacelle leading rim lower 38 and another lateral quadrant 39b and the nacelle trailing rim lower 33 and another lateral quadrant 34b. Axis A4 divides the nacelle leading rim upper 37 and another lateral quadrant 39b and the nacelle trailing rim upper 32 and another lateral quadrant 34b. The importance of all of the aforementioned sections will be described in further detail below.

The upper quadrant 32 of the nacelle trailing rim 31 extends farther aft than other quadrants of the trailing rim 31, creating an aft extension 35 of the trailing rim 31 and a contoured shaped for the fan nozzle 42. Additionally, lateral quadrants 34a, 34b may extend farther aft than the lower quadrant 33 of the trailing rim 31. This may be desirable to reduce total nacelle 30 weight and fan duct losses, while also reducing engine exhaust impingement below in the following embodiments, may also provide a reduction of engine exhaust impingement on an aircraft wing.

The nacelle 30 is axially longer in a first illustrated axial length L1 than in a second illustrated axial length L2. As illustrated, length L1 represents the axial distance between the upper quadrant 37 of the leading rim 36 and upper quadrant 32 of the trailing rim 31. Length L2 represents the distance between the lower quadrant 38 of the leading rim 36 and lower quadrant 33 of the trailing rim 31.

The nacelle 30 is axially longer in a third illustrated axial length L3 than in a fourth illustrated axial length L4 and a fifth illustrated axial length L5. As illustrated, length L3 represents the axial distance between the upper quadrant 37 of the leading rim 36 and upper quadrant 32 of the trailing rim 31. Length L4 represents the distance between lateral quadrant 39a of the leading rim 36 and the corresponding lateral quadrant 34a of the trailing rim 31. Length L5 represents the distance between lateral quadrant 39b of the leading rim 36 and the corresponding lateral quadrant 34b of the trailing rim 31.

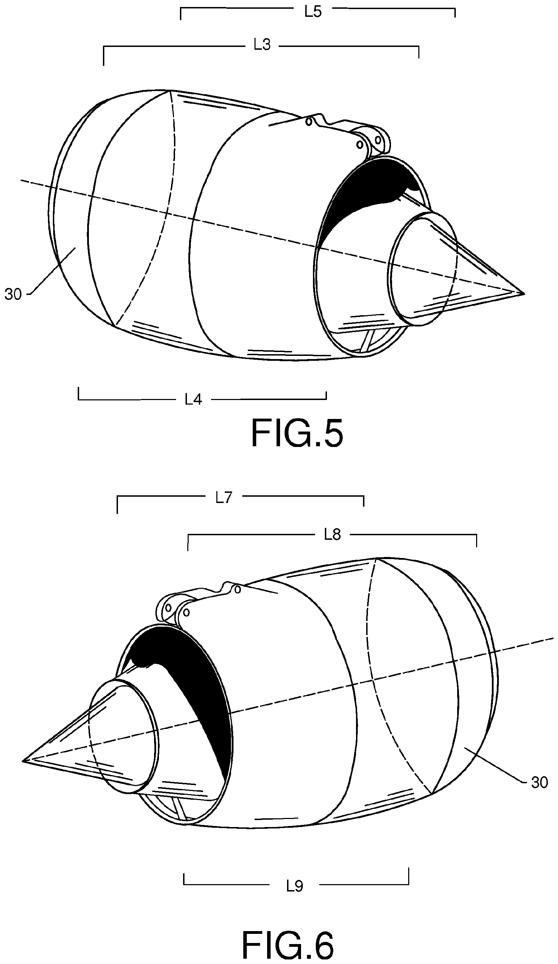

In yet another embodiment shown in FIG. 6, the nacelle 30 is axially longer in a seventh illustrated axial length L7 and an eighth illustrated axial length L8 than in a ninth illustrated axial length L9. As illustrated, length L7 represents the distance between lateral quadrant 39a of the leading rim 36 and the corresponding lateral quadrant 34a of the trailing rim 31. Length L8 represents the distance between lateral quadrant 39b of the leading rim 36 and the corresponding lateral quadrant 34b of the trailing rim 31. Length L9 represents the axial distance between the lower quadrant 38 of the leading rim 36 and lower quadrant 33 of the trailing rim 31.

In above disclosed aspects of the embodiments, the nacelle 30 is divided into quadrants of different lengths. The aft extension 35 of the nacelle trailing rim 31 along the upper quadrant 32 of the nacelle trailing rim 31 is configured to gradually merge with the nacelle trailing rim 31. Thus, the nacelle trailing rim 31 may be shaped, when viewed from the aft end, looking forward, substantially like an arc of a circle centered on the central longitudinal axis 19 throughout the non-extended portion. In this configuration, the fan duct 41 retains substantially annular in shape axially between the fan 22 and the fan nozzle 42.

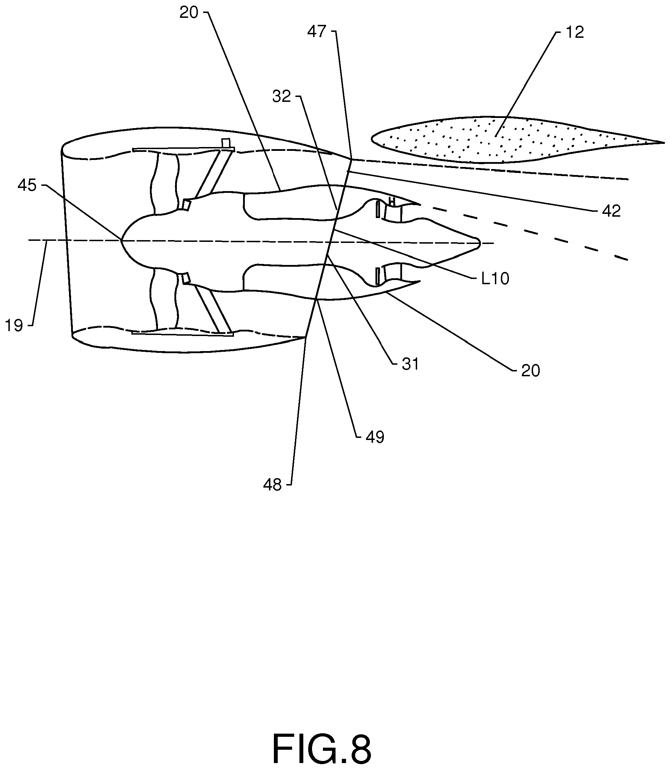

FIG. 8 shows another example falling outside the scope of the claims, wherein, when viewed laterally, the nacelle trailing rim 31 forms a straight line L10 between the midpoint of the upper quadrant 47 of nacelle trailing rim 31 and the midpoint of the lower quadrant 48 of the trailing rim 3. FIG. 8 also shows a circumferential hump 49 in the engine core cowl. The nacelle trailing rim 31 may be aligned with the circumferential hump 49. The circumferential hump 49 may be located at the nearest point along the core cowl 20 to the nacelle trailing rim 31. This alignment may reduce the fan nozzle 42 exhaust area, leading to beneficial fan exhaust properties.

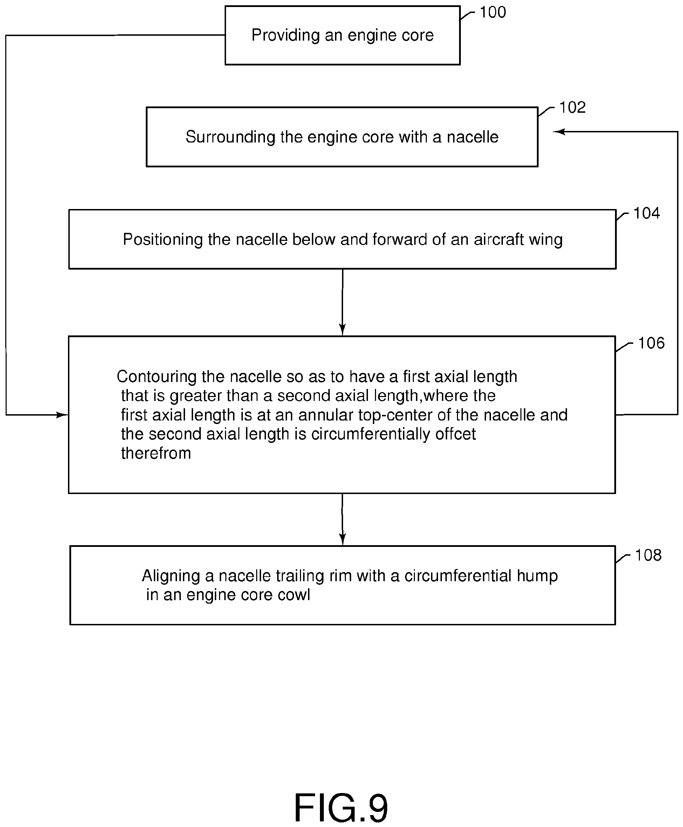

Turning to FIG. 9, a flow chart illustrates a method for reducing impingement of engine exhaust on an aircraft wing. The method comprises providing an engine core 100, surrounding the engine core with a nacelle 102, positioning the nacelle below and forward of an aircraft wing 104, and contouring the nacelle so as to have a first axial length that is greater than a second axial length, where the first axial length is at an annular top-center of the nacelle and the second axial length is circumferentially offset therefrom 106. Further, the method may include aligning a nacelle trailing rim with a circumferential hump in an engine core cowl 108.

## Claims

1. A gas turbine engine (10), comprising:
a fan (22);
an engine core (18); and
a nacelle (30) surrounding the engine core (18), the engine core (18) and the nacelle (30) sharing a central longitudinal axis (19),
wherein the nacelle (30) includes an axial aft edge curvature such that the nacelle (30) has a first axial length (L1) that is greater than a second axial length (L2),
where the first axial length (L1) is at an annular top-center of the nacelle (30) and the second axial length (L2) is circumferentially offset therefrom, wherein the nacelle leading rim (36) has upper, lateral and lower quadrants (37, 39a, 39b, 38), the nacelle trailing rim (31) has upper, lateral and lower quadrants (32, 34a, 34b, 33);
the nacelle (30) having a first length (L3) measured between the upper quadrant (37) of the nacelle leading rim (36) and the upper quadrant (32) of the nacelle trailing rim (31), a second length (L4) measured between one lateral quadrant (39a) of the nacelle leading rim (36) and the lateral quadrant (34a) of the nacelle trailing rim (31) on the same side of the central longitudinal axis (19) and a third length (L5) measured between another lateral quadrant (39b) of the nacelle leading rim (36) and the lateral quadrant (34b) of the nacelle trailing rim (31) on the same side of the central longitudinal axis (19), the upper quadrant (32) of the nacelle trailing rim (31) extending further aft than other quadrants of the trailing rim (31) creating an aft extension (35) of the trailing rim (31), and the first length (L3) being greater than the second and third lengths (L4, L5);
**characterised in that**:
the aft extension (35) has a trailing edge with, as seen from the side, a point of inflection and is configured to gradually merge with the nacelle trailing rim (31).

2. The gas turbine engine of claim 1, wherein the engine core (18) includes a compressor (14) downstream of the fan (22), a combustor (16) downstream of the compressor (14), and a turbine (17) downstream of the combustor (16).

3. The gas turbine engine of claim 2, wherein the nacelle trailing rim (31) is aligned with a circumferential hump (49) in an engine core cowl (20), the circumferential hump (49) located at the nearest point along the engine core cowl (20) to the nacelle trailing rim (31).

4. The gas turbine engine of any preceding claim, the nacelle having a fourth length (L9) measured between the lower quadrant (38) of the nacelle leading rim (36) and the lower quadrant (33) of the nacelle trailing rim (31), wherein the second and third lengths (L4, L5) are greater than the fourth length (L9).

5. The gas turbine engine claim 4, wherein the first length (L3) is greater than the second, third and fourth lengths (L4, L5, L9).

6. The gas turbine engine of any preceding claim, wherein the upper quadrant (32) of the nacelle trailing rim (31) extends farther aft than the lower quadrant (33) of the nacelle trailing rim (31).

7. The gas turbine engine of any preceding claim, wherein the lateral quadrants (34a, 34b) of the nacelle trailing rim (31) extend farther aft than the lower quadrant (33) of the nacelle trailing rim (31).

8. The gas turbine engine of any preceding claim, wherein the upper quadrant (32) of the nacelle trailing rim (31) extends farther aft than the lateral quadrants (34a, 34b) of the nacelle trailing rim (31).

9. A method of reducing gas turbine engine exhaust impingement on an aircraft wing comprising:
providing an engine core (18);
surrounding the engine core (18) with a nacelle (30), the nacelle having a trailing rim (31);
positioning the nacelle (30) below and forward of an aircraft wing (12);
contouring the nacelle (30) so as to have a first axial length (L1) that is greater than a second axial length (L2), where the first axial length (L1) is at an annular top-center of the nacelle (30) and the second axial length (L2) is circumferentially offset therefrom, the nacelle (30) having a first length (L3) measured between the upper quadrant (37) of the nacelle leading rim (36) and the upper quadrant (32) of the nacelle trailing rim (31), a second length (L4) measured between one lateral quadrant (39a) of the nacelle leading rim (36) and the lateral quadrant (34a) of the nacelle trailing rim (31) on the same side of the central longitudinal axis (19) and a third length (L5) measured between another lateral quadrant (39b) of the nacelle leading rim (36) and the lateral quadrant (34b) of the nacelle trailing rim (31) on the same side of the central longitudinal axis (19), the upper quadrant (32) of the nacelle trailing rim (31) extending further aft than other quadrants of the trailing rim (31) creating an aft extension (35) of the trailing rim (31), and the first length (L3) being greater than the second and third lengths (L4, L5);
**characterised in that**:
the aft extension (35) has a trailing edge with, as seen from the side, a point of inflection and is configured to gradually merge with the nacelle trailing rim (31).

10. The method of claim 9, further including aligning a nacelle trailing rim (31) with a circumferential hump (49) in an engine core cowl (20), the engine core cowl (20) disposed within the nacelle (30), the nacelle (30) and the engine core (20) cowl sharing a central longitudinal axis (19), the circumferential hump (49) located at the nearest point along the engine core cowl (20) to the nacelle trailing rim (31).

## Patentansprüche

1. Gasturbinentriebwerk (10), umfassend:
einen Fan (22);
einen Triebwerkskern (18); und
eine Gondel (30), die den Triebwerkskern (18) umgibt, wobei der Triebwerkskern (18) und die Gondel (30) eine gemeinsame Mittellängsachse (19) aufweisen,
wobei die Gondel (30) eine axiale Hinterkantenkrümmung beinhaltet, sodass die Gondel (30) eine erste axiale Länge (L1) aufweist, die größer als eine zweite axiale Länge (L2) ist,
wobei die erste axiale Länge (L1) an einem oberen Ringmittelpunkt der Gondel (30) liegt und die zweite axiale Länge (L2) in Umfangsrichtung davon versetzt ist, wobei der Gondelvorderrand (36) obere, seitliche und untere Quadranten (37, 39a, 39b, 38) aufweist, wobei der Gondelhinterrand (31) obere, seitliche und untere Quadranten (32, 34a, 34b, 33) aufweist;
wobei die Gondel (30) eine erste Länge (L3), gemessen zwischen dem oberen Quadranten (37) des Gondelvorderrands (36) und dem oberen Quadranten (32) des Gondelhinterrands (31), eine zweite Länge (L4), gemessen zwischen einem seitlichen Quadranten (39a) des Gondelvorderrands (36) und dem seitlichen Quadranten (34a) des Gondelhinterrands (31) auf derselben Seite der Mittellängsachse (19), und eine dritte Länge (L5), gemessen zwischen einem anderen seitlichen Quadranten (39b) des Gondelvorderrands (36) und dem seitlichen Quadranten (34b) des Gondelhinterrands (31) auf derselben Seite der Mittellängsachse (19), aufweist, wobei sich der obere Quadrant (32) des Gondelhinterrands (31) weiter nach hinten als andere Quadranten des Hinterrands (31) erstreckt, wodurch eine hintere Verlängerung (35) des Hinterrands (31) erzeugt wird, und wobei die erste Länge (L3) größer als die zweite und die dritte Länge (L4, L5) ist;
**dadurch gekennzeichnet, dass**:
die hintere Verlängerung (35) eine Hinterkante mit, von der Seite gesehen, einem Wendepunkt aufweist und so konfiguriert ist, dass sie nach und nach in den Gondelhinterrand (31) übergeht.

2. Gasturbinentriebwerk nach Anspruch 1, wobei der Triebwerkskern (18) einen Verdichter (14) stromabwärts des Fans (22), eine Brennkammer (16) stromabwärts des Verdichters (14) und eine Turbine (17) stromabwärts der Brennkammer (16) beinhaltet.

3. Gasturbinentriebwerk nach Anspruch 2, wobei der Gondelhinterrand (31) auf eine umlaufende Aufwölbung (49) in einer Triebwerkskernhaube (20) ausgerichtet ist, wobei die umlaufende Aufwölbung (49) an dem nächsten Punkt entlang der Triebwerkskernhaube (20) zum Gondelhinterrand (31) angeordnet ist.

4. Gasturbinentriebwerk nach einem der vorstehenden Ansprüche, wobei die Gondel eine vierte Länge (L9) aufweist, die zwischen dem unteren Quadranten (38) des Gondelvorderrands (36) und dem unteren Quadranten (33) des Gondelhinterrands (31) gemessen wird, wobei die zweite und die dritte Länge (L4, L5) größer als die vierte Länge (L9) sind.

5. Gasturbinentriebwerk nach Anspruch 4, wobei die erste Länge (L3) größer als die zweite, dritte und vierte Länge (L4, L5, L9) ist.

6. Gasturbinentriebwerk nach einem der vorstehenden Ansprüche, wobei sich der obere Quadrant (32) des Gondelhinterrands (31) weiter nach hinten erstreckt als der untere Quadrant (33) des Gondelhinterrands (31).

7. Gasturbinentriebwerk nach einem der vorstehenden Ansprüche, wobei sich die seitlichen Quadranten (34a, 34b) des Gondelhinterrands (31) weiter nach hinten erstrecken als der untere Quadrant (33) des Gondelhinterrands (31).

8. Gasturbinentriebwerk nach einem der vorstehenden Ansprüche, wobei sich der obere Quadrant (32) des Gondelhinterrands (31) weiter nach hinten erstreckt als die seitlichen Quadranten (34a, 34b) des Gondelhinterrands (31).

9. Verfahren zum Verringern eines Gasturbinentriebwerksabgasaufpralls auf einen Luftfahrzeugflügel, umfassend:
Bereitstellen eines Triebwerkskerns (18);
Umgeben des Triebwerkskerns (18) mit einer Gondel (30), wobei die Gondel einen Hinterrand (31) aufweist;
Positionieren der Gondel (30) unter und vor einem Luftfahrzeugflügel (12);
Konturieren der Gondel (30), sodass sie eine erste axiale Länge (L1) aufweist, die größer als eine zweite axiale Länge (L2) ist, wobei die erste axiale Länge (L1) an einem oberen Ringmittelpunkt der Gondel (30) liegt und die zweite axiale Länge (L2) in Umfangsrichtung davon versetzt ist, wobei die Gondel (30) eine erste Länge (L3), gemessen zwischen dem oberen Quadranten (37) des Gondelvorderrands (36) und dem oberen Quadranten (32) des Gondelhinterrands (31), eine zweite Länge (L4), gemessen zwischen einem seitlichen Quadranten (39a) des Gondelvorderrands (36) und dem seitlichen Quadranten (34a) des Gondelhinterrands (31) auf derselben Seite der Mittellängsachse (19), und eine dritte Länge (L5), gemessen zwischen einem anderen seitlichen Quadranten (39b) des Gondelvorderrands (36) und dem seitlichen Quadranten (34b) des Gondelhinterrands (31) auf derselben Seite der Mittellängsachse (19), aufweist, wobei sich der obere Quadrant (32) des Gondelhinterrands (31) weiter nach hinten als andere Quadranten des Hinterrands (31) erstreckt, wodurch eine hintere Verlängerung (35) des Hinterrands (31) erzeugt wird, und wobei die erste Länge (L3) größer als die zweite und die dritte Länge (L4, L5) ist;
**dadurch gekennzeichnet, dass**:
die hintere Verlängerung (35) eine Hinterkante mit, von der Seite gesehen, einem Wendepunkt aufweist und so konfiguriert ist, dass sie nach und nach in den Gondelhinterrand (31) übergeht.

10. Verfahren nach Anspruch 9, ferner das Ausrichten eines Gondelhinterrands (31) auf eine umlaufende Aufwölbung (49) in einer Triebwerkskernhaube (20) beinhaltend, wobei die Triebwerkskernhaube (20) innerhalb der Gondel (30) angeordnet ist, wobei die Gondel (30) und die Triebwerkskern(20)haube eine gemeinsame Mittellängsachse (19) aufweisen, wobei die umlaufende Aufwölbung (49) an dem nächsten Punkt entlang der Triebwerkskernhaube (20) zum Gondelhinterrand (31) angeordnet ist.

## Revendications

1. Moteur à turbine à gaz (10), comprenant :
une soufflante (22) ;
un noyau de moteur (18) ; et
une nacelle (30) entourant le noyau de moteur (18), le noyau de moteur (18) et la nacelle (30) partageant un axe longitudinal central (19),
dans lequel la nacelle (30) inclut une courbure de bord axiale arrière de sorte que la nacelle (30) a une première longueur axiale (L1) qui est supérieure à une deuxième longueur axiale (L2),
où la première longueur axiale (L1) est au niveau d'un centre supérieur annulaire de la nacelle (30) et la deuxième longueur axiale (L2) est décalée de manière circonférentielle par rapport à celle-ci, dans lequel le rebord avant de nacelle (36) a des quadrants supérieur, latéral et inférieur (37, 39a, 39b, 38), le rebord arrière de nacelle (31) a des quadrants supérieur, latéral et inférieur (32, 34a, 34b, 33) ;
la nacelle (30) ayant une première longueur (L3) mesurée entre le quadrant supérieur (37) du rebord avant de nacelle (36) et le quadrant supérieur (32) du rebord arrière de nacelle (31), une deuxième longueur (L4) mesurée entre un quadrant latéral (39a) du rebord avant de nacelle (36) et le quadrant latéral (34a) du rebord arrière de nacelle (31) du même côté de l'axe longitudinal central (19) et une troisième longueur (L5) mesurée entre un autre quadrant latéral (39b) du rebord avant de nacelle (36) et le quadrant latéral (34b) du rebord arrière de nacelle (31) du même côté de l'axe longitudinal central (19), le quadrant supérieur (32) du rebord arrière de nacelle (31) s'étendant plus vers l'arrière que d'autres quadrants du rebord arrière (31) créant une extension arrière (35) du rebord arrière (31), et la première longueur (L3) étant supérieure aux deuxième et troisième longueurs (L4, L5) ;
**caractérisé en ce que** :
l'extension arrière (35) a un bord arrière avec, vue de côté, un point d'inflexion et est configurée pour fusionner progressivement avec le rebord arrière de nacelle (31).

2. Moteur à turbine à gaz selon la revendication 1, dans lequel le noyau de moteur (18) inclut un compresseur (14) en aval de la soufflante (22), une chambre de combustion (16) en aval du compresseur (14) et une turbine (17) en aval de la chambre de combustion (16).

3. Moteur à turbine à gaz selon la revendication 2, dans lequel le rebord arrière de nacelle (31) est aligné avec une bosse circonférentielle (49) dans un capot de noyau de moteur (20), la bosse circonférentielle (49) étant située au niveau du point le plus proche le long du capot de noyau de moteur (20) du rebord arrière de nacelle (31).

4. Moteur à turbine à gaz selon une quelconque revendication précédente, la nacelle ayant une quatrième longueur (L9) mesurée entre le quadrant inférieur (38) du rebord avant de nacelle (36) et le quadrant inférieur (33) du rebord arrière de nacelle (31), dans lequel les deuxième et troisième longueurs (L4, L5) sont supérieures à la quatrième longueur (L9) .

5. Moteur à turbine à gaz selon la revendication 4, dans lequel la première longueur (L3) est supérieure aux deuxième, troisième et quatrième longueurs (L4, L5, L9).

6. Moteur à turbine à gaz selon une quelconque revendication précédente, dans lequel le quadrant supérieur (32) du rebord arrière de nacelle (31) s'étend plus en arrière que le quadrant inférieur (33) du rebord arrière de nacelle (31).

7. Moteur à turbine à gaz selon une quelconque revendication précédente, dans lequel les quadrants latéraux (34a, 34b) du rebord arrière de nacelle (31) s'étendent plus en arrière que le quadrant inférieur (33) du rebord arrière de nacelle (31).

8. Moteur à turbine à gaz selon une quelconque revendication précédente, dans lequel le quadrant supérieur (32) du rebord arrière de nacelle (31) s'étend plus en arrière que les quadrants latéraux (34a, 34b) du rebord arrière de nacelle (31) .

9. Procédé de réduction de l'impact des gaz d'échappement d'un moteur à turbine à gaz sur une aile d'aéronef comprenant :
la fourniture d'un noyau de moteur (18) ;
le fait d'entourer le noyau de moteur (18) avec une nacelle (30), la nacelle ayant un rebord arrière (31) ;
le positionnement de la nacelle (30) en dessous et en avant d'une aile d'aéronef (12) ;
le contournement de la nacelle (30) de manière à avoir une première longueur axiale (L1) qui est supérieure à une deuxième longueur axiale (L2), où la première longueur axiale (L1) est au niveau d'un centre supérieur annulaire de la nacelle (30) et la deuxième longueur axiale (L2) en est décalée de manière circonférentielle par rapport à celle-ci, la nacelle (30) ayant une première longueur (L3) mesurée entre le quadrant supérieur (37) du rebord avant de nacelle (36) et le quadrant supérieur (32) du rebord arrière de nacelle (31), une deuxième longueur (L4) mesurée entre un quadrant latéral (39a) du rebord avant de nacelle (36) et le quadrant latéral (34a) du rebord arrière de nacelle (31) du même côté de l'axe longitudinal central (19) et une troisième longueur (L5) mesurée entre un autre quadrant latéral (39b) du rebord avant de nacelle (36) et le quadrant latéral (34b) du rebord arrière de nacelle (31) du même côté de l'axe longitudinal central (19), le quadrant supérieur (32) du rebord arrière de nacelle (31) s'étendant plus en arrière que d'autres quadrants du rebord arrière (31) créant une extension arrière (35) du rebord arrière (31), et la première longueur (L3) étant supérieure aux deuxième et troisième longueurs (L4, L5) ;
**caractérisé en ce que** :
l'extension arrière (35) présente un bord arrière avec, vue de côté, un point d'inflexion et est configurée pour fusionner progressivement avec le rebord arrière de nacelle (31) .

10. Procédé selon la revendication 9, incluant en outre l'alignement d'un rebord arrière de nacelle (31) avec une bosse circonférentielle (49) dans un capot de noyau de moteur (20), le capot de noyau de moteur (20) étant disposé à l'intérieur de la nacelle (30), la nacelle (30) et le capot de noyau de moteur (20) partageant un axe longitudinal central (19), la bosse circonférentielle (49) étant située au niveau du point le plus proche le long du capot de noyau de moteur (20) du rebord arrière de nacelle (31).
